# EUROPÄISCHE PATENTANMELDUNG

(11) **EP 3 467 324 A2**
(43) Veröffentlichungstag der Anmeldung: **10.04.2019**
(21) Anmeldenummer: 18199320.5
(22) Anmeldetag: 09.10.2018
(51) Int. Cl.: F16B 7/22, F16L 37/18, F16L 37/20, B64F 1/36, F16B 2/18

(54) **VERRIEGELUNGSVORRICHTUNG ZUM DICHTEN VERBINDEN EINES SCHLAUCHES MIT EINEM FLUGOBJEKT**

(30) Priorität: 09.10.2017 DE 102017123423
(71) Anmelder: Quickloading GmbH, 85640 Putzbrunn (DE)
(72) Erfinder: Kubatzki, Klaus, 85521 Riemerling (DE); van der Lelij, Armin, 83734 Hausham (DE)
(74) Vertreter: Leonhard, Frank Reimund

(57) **Zusammenfassung**

Die Erfindung betrifft einen Adapter zum Verbinden eines Schlauches mit einem Flugobjekt. Die Verriegelungsvorrichtung soll zeitsparend, kostensparend und mit hoher Dichtigkeit an einem Flugobjekt anbringbar sein. Vorgeschlagen wird eine Fingerbetätigbare Verriegelungsvorrichtung für die Anbringung eines Luftschlauchs an einem Flugobjekt mit zumindest einem längsbewegbaren Greifarm 2,2, der zwischen zwei Halteplatten 3a,3b; 3a',3b' zum Eingriff in Vorsprünge am Flugobjekt längsbeweglich angeordnet ist. Der Greifarm 2,2' ist von einer schwenkbar angeordneten Steuerplatte 4,4' längsbeweglich gesteuert. Der Greifarm 2,2' ist ausgefahren, wenn die Steuerplatte 4,4' in einer ersten Winkelendlage α₁ liegt und der Greifarm 2,2' ist zurückgezogen, wenn die Steuerplatte 4 in einer zweiten Winkelendlage α₅ liegt, zum Verriegeln an dem Flugobjekt. Die beiden Winkelendlagen α₁, α₅ sind von zumindest einem an der schwenkbaren Steuerplatte 4,4' angeordneten Griff 15a, 15b, 15a', 15b' fingerbetätigt gesteuert erreichbar. Die eine Winkelendlage ist von jeweils einem und die andere Winkelendlage von einem jeweils anderen Finger derselben Hand ansteuerbar.

## Beschreibung

Die Erfindung betrifft einen Adapter zum Verbinden (Anbringen und Verriegeln) eines Schlauches mit einem Flugobjekt.

Während der Bodenzeit eines Flugobjekts auf dem Flughafenvorfeld, wird das Flugobjekt oft mit gekühlter oder erwärmter (temperierter) Luft versorgt. Die Luft wird typischerweise durch eine Heiz- oder Kühleinheit temperiert und durch einen Schlauch zu dem Flugobjekt geleitet. Der Schlauch kann durch einen Adapter (Verriegelungsvorrichtung) mit einem Anschluss am Flugobjekt verbunden werden, sodass die temperierte Luft aus der Heiz- oder Kühleinheit in das Luftverteilersystem des Flugobjekts gelangen kann.

Ein solcher Adapter muss schnell und einfach an das Flugobjekt anbringbar sein, um die kostenintensive Bodenzeit eines Flugobjekts möglichst effizient zu nutzen.

Idealerweise ist ein solcher Adapter durch eine einzelne Person betätigbar, um keine intensiven Personalkosten entstehen zu lassen.

Gleichzeitig soll der Adapter die Verbindung zwischen Flugobjekt und Schlauch dicht herstellen, sodass sehr geringe Verluste der temperierten Luft durch Undichtigkeiten entstehen.

Weiterhin sollen Verschleißteile des Adapters kostengünstig austauschbar sein.

Aus dem Stand der Technik bekannte Adapter oder Verriegelungsvorrichtungen erreichen diese Anforderungen nur unzureichend oder teilweise.

Die US 2010/0207383 A1 offenbart einen Adapter zur Verbindung eines Schlauches mit einem Flugzeug, um temperierte Luft durch den Schlauch in das Flugzeug zu leiten. Der Adapter kann an Griffen gehalten werden und durch eine Bewegung derselben Griffe kann der Adapter mit dem Flugzeug verriegelt werden.

**Die Erfindung steht vor der Aufgabe,** eine Verriegelungsvorrichtung bereitzustellen, die zeitsparend, kostensparend und mit hoher Dichtigkeit an einem Flugobjekt angebracht werden kann. Eine weitere Aufgabe der Verriegelungsvorrichtung liegt in einer kosten- und zeitsparenden Austauschbarkeit von Verschleißteilen der Vorrichtung.

Gelöst wird die Aufgabe durch die Verriegelungsvorrichtungen nach den Ansprüchen 1 oder 12.

Vorgeschlagen wird eine fingerbetätigbare Verriegelungsvorrichtung, die zum Anbringen eines Schlauches (Luftschlauches) an einem Flugobjekt geeignet ist. Die Verriegelungsvorrichtung umfasst zumindest einem längsbewegbaren Greifarm, der zwischen zwei Halteplatten längsbeweglich angeordnet ist und in Vorsprünge am Flugobjekt eingreifen kann. Der Greifarm ist von einer schwenkbar angeordneten Steuerplatte längsbeweglich gesteuert. Wenn die Steuerplatte in einer ersten Winkelendlage liegt, ist der Greifarm ausgefahren und wenn die Steuerplatte in einer zweiten Winkelendlage liegt, ist der Greifarm zum Verriegeln an dem oder mit dem Flugobjekt zurückgezogen. Die beiden Winkelendlagen sind von zumindest einem Griff, der an der schwenkbaren Steuerplatte angeordnet ist, fingerbetätigt gesteuert erreichbar oder werden fingerbetätigt erreicht, wobei eine Winkelendlage von einem Finger einer Hand ansteuerbar ist und die andere Winkelendlage von einem anderen Finger derselben Hand ansteuerbar ist. Dies insbesondere ohne die Position der Hand zu verändern.

Der Winkel zwischen den beiden Winkelendlagen kann kleiner als 150°, insbesondere kleiner als 90°, sein.

Insbesondere ist der maximale Winkel zwischen den beiden Winkelendlagen der Mittelpunktswinkel eines Kreissegments eines (extrapolierten) Kreises der Schwenkbewegung der Steuerplatte um dessen Schwenkachse.

Die Längsbewegbarkeit ist speziell eine axiale Bewegbarkeit.

Die beiden Halteplatten können mit einem Niet oder Bolzen abstandsfest verbunden sein.

Eine innere der Halteplatten kann an einem Zylinderstück direkt angeordnet sein. Speziell kann eine innere Halteplatte über eine Fortsetzung des Niets oder Bolzens, der die beiden Halteplatten abstandsfest verbindet, direkt angeordnet sein.

Das Zylinderstück kann ein Hohlzylinder sein. Der Hohlzylinder kann einen Innendurchmesser von mindesten 100 mm aufweisen. Der Hohlzylinder kann auch eine Höhe von mindestens 30 mm aufweisen, bevorzugt eine Höhe von maximal 200 mm.

Das Zylinderstück kann eine Wandstärke von mindestens 1 mm aufweisen.

Das Zylinderstück kann einen Schlitz aufweisen, der sich bevorzugt über dessen gesamte Höhe erstreckt, sodass das Zylinderstück radial ausziehbar ist.

Das Zylinderstück kann ein Metall umfassen oder aus einem Metall bestehen.

Die Verriegelungsvorrichtung kann zwei längsbewegbaren Greifarmen umfassen, wobei jeder der beiden Greifarme zwischen zwei Halteplatten längsbeweglich angeordnet ist. Die beiden längsbewegbaren Greifarme können über die jeweils ihr zugeordnete innere Halteplatte gegenüberliegend am Zylinderstück angeordnet sein.

Die äußere Halteplatte oder die jeweils äußere Halteplatte kann so ausgebildet sein, dass ein aufgeschobener Haltegriff mit einem Abdeckungsabschnitt arretiert ist. Dies durch Eingriff eines Inneren des Abdeckungsabschnitts an der jeweils äußeren Halteplatte.

Es kann eine Hülse vorgesehen sein. Auf die Hülse kann das Zylinderstück axial aufschiebbar sein, um daran befestigt zu werden.

Die Hülse ist speziell ein Hohlzylinder. Die Hülse kann einen Kunststoff umfassen oder aus einem Kunststoff bestehen. Speziell besteht die Hülse aus POM (Polyoxymethylen).

Die Hülse kann einen Durchmesser von mindestens 100 mm aufweisen. Die Hülse kann eine Höhe von mindestens 100 mm aufweisen und/oder eine Höhe von maximal 500 mm aufweisen.

Das Zylinderstück kann an der Hülse angebracht werden, ohne dass der Haltegriff angebracht ist. Speziell kann der aufzuschiebende Haltegriff erst nach der Montage oder Anbringung des Zylinderstücks an der Hülse erfolgen.

Der oder jeder aufgeschobene Haltegriff kann an einem Steckelement, das in oder auf die Hülse einsteckbar oder aufsteckbar ist (eingesteckt oder aufgesteckt ist), befestigbar sein und am unteren Ende des Abdeckungsabschnitts der zumindest eine, an der schwenkbaren Steuerplatte angeordnete, fingerbetätigbare Griff vorstehen.

Das Steckelement kann an einem Stutzen eines Flugobjekts ansteckbar sein. Ein Schlauch kann auf die Hülse aufsteckbar oder aufschiebbar sein. Insbesondere kann die Hülse drehfähig gegenüber dem Zylinderstück sein.

Der Greifarm (oder die Greifarme) kann eine Kulissenbahn umfassen, in die ein Kulissenrad oder Kulissenstift, der auf der Steuerplatte angeordnet ist, eingreift. Das Kulissenrad oder der Kulissenstift kann in der Kulissenbahn bewegbar sein, sodass durch eine Schwenkbewegung der Steuerplatte eine Längsbewegung (axiale Bewegung) des Greifarms verursacht wird.

Die Steuerplatte kann eine Ausnehmung umfassen, in die ein Eingriffsstück, das auf einer der Halteplatten angeordnet ist, eingreifen kann, sodass eine mögliche Schwenkbewegung der Steuerplatte zwischen den Winkelendlagen begrenzt ist.

Eine Verriegelungsvorrichtung kann einen Haltegriff umfassen, der relativ zu einem oder mehreren der Halteplatten im Wesentlichen unbeweglich angeordnet ist.

Bevorzugt umfasst die Verriegelungsvorrichtung einen Haltegriff, der so angeordnet ist, dass dieser während einer Bewegung der Steuerplatte zwischen der ersten Winkelendlage und der zweiten Winkelendlage oder vice versa im Wesentlichen unbewegt bleibt.

Das im Wesentlichen "unbewegt bleibt" oder "unbeweglich angeordnet ist" kann sich auf eine Bewegung von maximal 5,0 mm, bevorzugt maximal 1,0 mm, beziehen. Das im Wesentlichen "unbewegt bleibt" oder "unbeweglich angeordnet ist" bezieht sich also auf eine funktionelle Unbeweglichkeit.

Speziell kann die Verriegelungsvorrichtung zwei Haltegriffe umfassen.

Durch die Unbeweglichkeit des Haltegriffs kann ein Benutzer die Verriegelungsvorrichtung mit einer Hand an dem Haltegriff greifen und gleichzeitig durch eine Betätigung des fingerbetätigbaren Griffs der Steuerplatte durch Finger derselben Hand den Greifarm bewegen, um die Verriegelungsvorrichtung an dem Flugobjekt zu verriegeln.

Vorgeschlagen wird auch eine Verriegelungsvorrichtung, die geeignet ist einen Schlauch mit einem Flugobjekt zu verbinden. Die Verriegelungsvorrichtung umfasst eine Hülse mit einem ersten Abschnitt und mit einem zweiten Abschnitt, ein Zylinderstück und eine Verriegelungsmechanik. Das Zylinderstück ist an dem zweiten Abschnitt der Hülse angeordnet. Der erste Abschnitt der Hülse ist so ausgestaltet, dass ein Schlauch auf den ersten Abschnitt der Hülse aufschiebbar ist. Die Verriegelungsmechanik ist direkt mit dem Zylinderstück verbunden.

Eine direkte Verbindung ist eine Verbindung ohne zwischenliegende Bauteile, ausgenommen Befestigungsmittel wie Nieten, Bolzen, Schrauben oder Vergleichbares.

Die Hülse und das Zylinderstück können wie oben beschrieben ausgestaltet sein.

Die Verriegelungsvorrichtung kann ein Steckelement umfassen, das wie oben beschrieben ausgestaltet sein kann. Das Steckelement kann in oder auf die Hülse eingesteckt oder aufgesteckt sein.

Die Verriegelungsvorrichtung kann einen Haltegriff umfassen. Der Haltegriff kann mit der Verriegelungsmechanik verbunden sein. Der Haltegriff kann mit dem Steckelement verbunden sein.

Insbesondere kann der Haltegriff mit der Verriegelungsmechanik durch eine Steckverbindung oder eine Rastverbindung verbunden sein. Der Haltegriff kann mit dem Steckelement durch ein Befestigungsmittel verbunden sein.

Ein Befestigungsmittel kann eine Schraube, ein Bolzen, ein Haken oder ein Niet sein.

Die Verriegelungsvorrichtung kann zwei Verriegelungsmechaniken und zwei Haltegriffe umfassen. Beide Verriegelungsmechaniken können direkt mit dem Zylinderstück verbunden sein. Beide Haltegriffe können mit dem Steckelement verbunden sein.

Insbesondere können die Haltegriffe mit den Verriegelungsmechaniken durch eine Steckverbindung oder eine Rastverbindung verbunden sein. Die Haltegriffe können mit dem Steckelement durch ein Befestigungsmittel verbunden sein.

Die Verriegelungsvorrichtung, speziell das Steckelement, kann ein Dichtungselement umfassen. Das Dichtungselement kann dichtend zwischen der Verriegelungsvorrichtung und dem Flugobjekt liegen, wenn die Verriegelungsvorrichtung mit dem Flugobjekt verbunden ist.

Die Verriegelungsmechanik kann zumindest einen längsbewegbaren (axial bewegbaren) Greifarm umfassen, der zwischen zwei Halteplatten zum Eingriff in Vorsprünge am Flugobjekt längsbeweglich angeordnet ist. Dabei kann der Greifarm von einer schwenkbar angeordneten Steuerplatte längsbeweglich gesteuert sein.

Der Greifarm kann ausgefahren sein, wenn die Steuerplatte in einer ersten Winkelendlage liegt. Der Greifarm kann zurückgezogen sein, wenn die Steuerplatte in einer zweiten Winkelendlage liegt, zum Verriegeln an dem Flugobjekt.

Insbesondere können die beiden Winkelendlagen von zumindest einem an der schwenkbaren Steuerplatte angeordneten Griff fingerbetätigt gesteuert erreichbar sein oder erreicht werden. Die eine Winkelendlage kann von jeweils einem und die andere Winkelendlage von einem jeweils anderen Finger derselben Hand ansteuerbar sein, speziell ohne eine Positionsänderung der Hand. Der Winkel zwischen den beiden Winkelendlagen kann kleiner als 150° sein.

Der Greifarm kann eine Kulissenbahn umfassen. In die Kulissenbahn kann ein Kulissenrad oder ein Kulissenstift eingreifen, der auf der Steuerplatte angeordnet sein kann und kann in der Kulissenbahn bewegbar sein, sodass eine Schwenkbewegung der Steuerplatte eine Längsbewegung des Greifarms verursacht.

Die Steuerplatte kann eine Ausnehmung umfassen, in die ein Eingriffsstück eingreifen kann. Das Eingriffsstück kann auf einer der Halteplatten angeordnet sein, sodass eine mögliche Schwenkbewegung der Steuerplatte zwischen den Winkelendlagen begrenzt ist.

Ein Haltegriff kann direkt mit einem oder dem Steckelement verbunden sein und der Haltegriff nicht direkt mit dem Zylinderstück verbunden sein.

Speziell können zwei Haltegriffe direkt mit einem oder dem Steckelement verbunden sein und keiner der Haltegriffe direkt mit dem Zylinderstück verbunden sein.

Eine der hierin offenbarten Verriegelungsvorrichtung kann verwendet werden, um einen Schlauch mit einem Flugobjekt, speziell mit einem Flugzeug, zu verbinden.

Die Ausführungsformen der Erfindung sind anhand von einem Beispiel dargestellt und nicht auf eine Weise, in der Beschränkungen aus den Figuren in die Patentansprüche übertragen oder hineingelesen werden. Gleiche Bezugszeichen in den Figuren geben gleiche Elemente an.

Gleiche Bezugszeichen in den Figuren geben gleiche Elemente an.
- Figur 1: zeigt eine Verriegelungsvorrichtung 1 in einer Explosionsansicht.
- Figur 2: zeigt einen Teil einer Verriegelungsmechanik 150, wobei die Steuerplatte 4 in einer Winkelendlage α₁ vorliegt, in einer Seitenansicht.
- Figur 3: zeigt einen Teil einer Verriegelungsmechanik 150, wobei die Steuerplatte 4 in einer Winkellage zwischen den beiden Winkelendlagen α₁ und α₅ vorliegt, in einer Seitenansicht.
- Figur 4: zeigt einen Teil einer Verriegelungsmechanik 150, wobei die Steuerplatte 4 in einer Winkelendlage α₅ vorliegt, in einer Seitenansicht.
- Figur 5: zeigt einen Teil einer Verriegelungsmechanik 150, wobei die Steuerplatte 4 in einer Winkelendlage α₁ vorliegt, in einer Seitenansicht.
- Figur 6: zeigt einen Teil einer Verriegelungsmechanik 150, wobei die Steuerplatte 4 in einer Winkellage zwischen den beiden Winkelendlagen α₁ und α₅ vorliegt, in einer Seitenansicht.
- Figur 7: zeigt einen Teil einer Verriegelungsmechanik 150, wobei die Steuerplatte 4 in einer Winkelendlage α₅ vorliegt, in einer Seitenansicht.

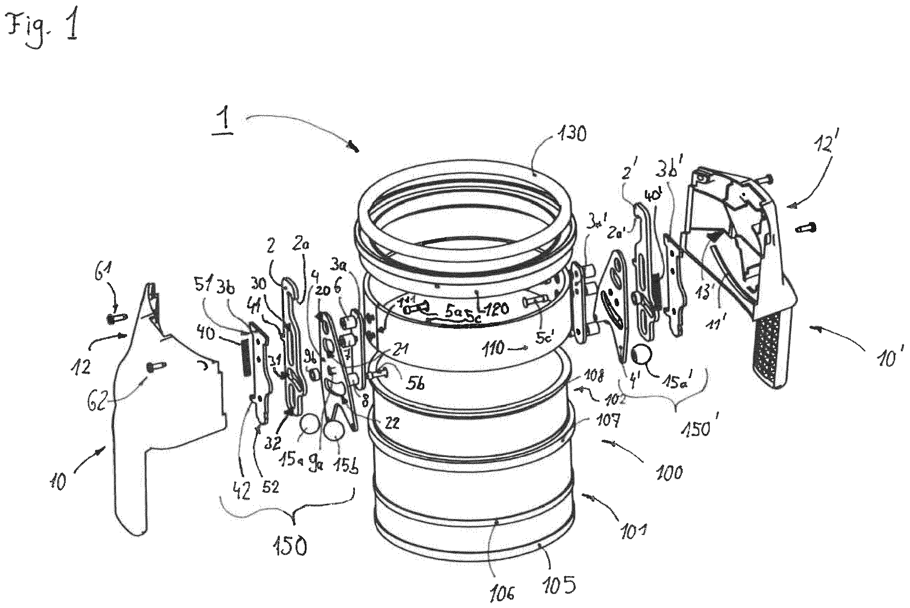

Die Explosionsansicht der Fig. 1 zeigt eine Ausführungsform einer Vorrichtung 1 zum Verbinden mit der Fähigkeit auch zu Verriegeln (Verriegelungsvorrichtung).

Die Verriegelungsvorrichtung 1 umfasst zwei Verriegelungsmechaniken 150, 150'. Die Verriegelungsmechaniken 150, 150' weisen je zwei Halteplatten 3a, 3b, 3a', 3b' auf. Zwischen den Halteplatten 3a, 3b, 3a', 3b' ist jeweils ein Greifarm 2, 2' und eine Steuerplatte 4, 4' angeordnet.

An den Steuerplatten 4, 4' sind jeweils zwei Griffe 15a, 15b, 15a', 15b' angeordnet, wobei der Abstand zwischen den Griffen 15a, 15b, 15a', 15b' so ausgewählt ist, dass je einer der Griffe 15a, 15b, 15a', 15b' durch einen Finger einer Hand eines Bedieners und ein anderer der Griffe 15a, 15b, 15a', 15b' durch einen Finger derselben Hand erreichbar ist, wobei die Position der Hand nicht verändert werden muss.

Beispielsweise kann der Griff 15a durch den Daumen einer Hand in eine Richtung gedrückt werden und der Griff 15b durch den Zeigefinger derselben Hand gezogen werden kann.

Bevorzugt ist der Abstand zwischen den Griffen 15a, 15b kleiner als 150 mm, besonders bevorzugt kleiner als 100 mm.

Im Folgenden wird eine der beiden Verriegelungsmechaniken 150, 150' beschrieben, nämlich die Verriegelungsmechanik 150, wobei die Verriegelungsmechanik 150' gleich aufgebaut ist und gleich betätigt werden kann.

Die Verriegelungsmechanik 150 ist durch drei Nieten 5a, 5b, 5c verbunden (der Niet 5c ist in Fig. 1 besser in seiner analogen Form als Niet 5c' der Verriegelungsmechanik 150' erkennbar).

Der erste Niet 5a durchgreift die innere Halteplatte 3a, die Steuerplatte 4 durch eine erste Ausnehmung 20 der Steuerplatte 4, den Greifarm 2 durch eine erste Ausnehmung 30 des Greifarms 2 und die andere (äußere) Halteplatte 3b.

Der zweite Niet 5c durchgreift die innere Halteplatte 3a, die Steuerplatte 4 durch eine zweite Ausnehmung 21 der Steuerplatte 4, den Greifarm 2 durch die erste Ausnehmung 30 des Greifarms 2 und die äußere Halteplatte 3b.

Der dritte Niet 5b durchgreift die innere Halteplatte 3a, die Steuerplatte 4 durch eine dritte Ausnehmung 22 der Steuerplatte 4, den Greifarm 2 durch eine zweite Ausnehmung 32 des Greifarms 2 und die andere äußere Halteplatte 3b.

Die erste Ausnehmung 20 der Steuerplatte 4 ist kreisrund, die zweite Ausnehmung 21 der Steuerplatte 4 ist kreisbogenförmig, wobei der Kreismittelpunkt des Kreisbogens im Wesentlichen dem Mittelpunkt der ersten Ausnehmung 20 der Steuerplatte 4 entspricht, und die dritte Ausnehmung 22 der Steuerplatte 4 ist ebenfalls kreisbogenförmig, wobei der Kreismittelpunkt des Kreisbogens im Wesentlichen dem Mittelpunkt der ersten Ausnehmung 20 der Steuerplatte 4 entspricht.

Die Länge des Kreisbogens der zweiten Ausnehmung 21 der Steuerplatte 4 ist größer als die Länge des Kreisbogens der dritten Ausnehmung 22 der Steuerplatte 4.

In der ersten Ausnehmung 20 der Steuerplatte 4 ist ein Eingriffsstück 6 angeordnet und die Steuerplatte 4 kann um den Mittelpunkt der ersten Ausnehmung 20 der Steuerplatte 4 schwenken. Das Eingriffsstück 6 ist ortsfest mit der inneren Halteplatte über den Niet 5a verbunden.

In der zweiten Ausnehmung 21 der Steuerplatte 4 ist ein Eingriffsstück 7 angeordnet, das ortsfest mit der inneren Halteplatte 3a verbunden ist (Niet 5c).

In der zweiten Ausnehmung 22 der Steuerplatte 4 ist ein Eingriffsstück 8 angeordnet, das ortsfest mit der inneren Halteplatte 3a verbunden ist (Niet 5b).

Die Eingriffsstücke 6, 7, 8 sind hier als Zylinder ausgestaltet, durch die jeweils ein Niet 5a, 5c, 5b greifen kann.

Durch diese Verbindung zwischen der Steuerplatte 4 und der inneren Halteplatte 3a kann die Steuerplatte 4 relativ zu der inneren Halteplatte 3a um den Mittelpunkt der ersten Ausnehmung 20 der Steuerplatte 4 geschwenkt werden.

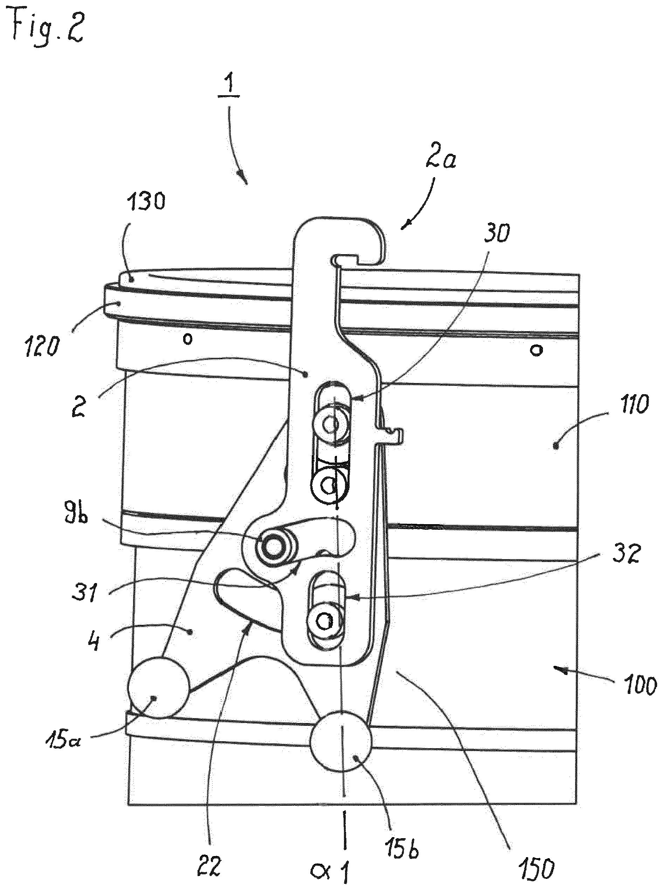

Die Schwenkbewegung ist innerhalb eines Mittelpunktwinkels α möglich, der durch zwei Winkelendlagen α₁ und α₅ begrenzt ist, was im späteren mit Bezug auf die Figuren 2 bis 7 näher erläutert wird. Die Schwenkbewegung der Steuerplatte 4 ist durch einen Anschlag eines der Eingriffsstücke 7, 8 an jeweils einer Seite der ersten und/oder zweiten Ausnehmung 21, 22 der Steuerplatte 4 begrenzt, wodurch auch die Winkelendlagen α₁ und α₅ definiert werden.

Die Schwenkbewegung der Steuerplatte 4 kann durch einen der Griffe 15a, 15b bewerkstelligt werden. Beispielsweise kann die Steuerplatte 4 durch ein Drücken mit dem Daumen einer Hand gegen den Griff 15a entgegen dem Uhrzeigersinn relativ zur inneren Halteplatte 3a bewegt werden und durch ein Ziehen mit dem Zeigefinger derselben Hand an dem Griff 15b im Uhrzeigersinn relativ zur inneren Halteplatte 3a bewegt werden.

Andersherum ist die Schwenkbewegung auch möglich, je nachdem, ob ein Bediener die linke oder die rechte Hand benutzt.

Das Eingriffsstück 7 sowie der Niet 5c greifen in die erste Ausnehmung 30 des Greifarms 2. Auch der Niet 5a greift in die erste Ausnehmung 30 des Greifarms 2. Das Eingriffsstück 8 sowie der Niet 5b greifen in die zweite Ausnehmung 31 des Greifarms 2.

Die erste und die zweite Ausnehmung 30, 31 sind längsorientiert, sodass eine Längsbewegung oder eine axiale Bewegung (Auf- oder Ab-Bewegung) des Greifarms 2 relativ zur inneren Halteplatte 3a möglich ist.

Weiterhin umfasst der Greifarm 2 eine Ausnehmung 31 als Kulissenbahn. In die Kulissenbahn 31 greift ein Kulissenrad 9b, das auf einem Kulissenradlager 9a ortsfest mit der Steuerplatte 4 verbunden ist.

Die Kulissenbahn 31 kann verschiedene Ausgestaltungen aufweisen, wobei die Ausgestaltung der Kulissenbahn 31 nicht auf dem Kreisbogen liegt, dessen Kreismittelpunkt dem Mittelpunkt der ersten Ausnehmung 20 der Steuerplatte 4 (im Wesentlichen) entspricht.

Stattdessen ist die Form der Kulissenbahn 31 so ausgestaltet, dass durch eine Schwenkbewegung der Steuerplatte 4 eine Kraft auf den Greifarm 2 über das Kulissenrad 9b ausgeübt wird.

Wegen den längsorientierten Ausnehmungen 30 und 32 des Greifarms 2 und den darin wie beschrieben liegenden Eingriffstücken 7 und 8 sowie den Nieten 5a, 5b, 5c bewirkt eine solche Kraft, die aus einer Schwenkbewegung der Steuerplatte 4 resultiert, eine Längsbewegung des Greifarms 2 relativ zur inneren Halteplatte 4.

Der Greifarm 2 weist an dessen oberen Abschnitt einen Greifhaken 2a auf. Durch eine Längsbewegung des Greifarms 2 erfolgt auch eine Längsbewegung (Auf- oder Ab-Bewegung) des Greifhakens 2a. Der Greifhaken 2a kann in einen Vorsprung an einem Flugobjekt eingreifen und dadurch die Verriegelungsvorrichtung 1 mit dem Flugobjekt verbinden.

Der Greifarm 2 umfasst einen Federhaken 41 der mit einem Federhaken 42 der äußeren Halteplatte 3b korrespondiert. Zwischen den Federhaken 41, 42 kann eine Feder 40, beispielsweise eine Schraubenzugfeder, angebracht werden, wodurch der Greifarm 2 in einer Grundposition gehalten wird, wenn keine weiteren Kräfte auf die Verriegelungsmechanik 150 wirken. Durch die mechanische Kopplung des Greifarms 2 mit der Steuerplatte 4 über die Kulissenbahn 31 und das Kulissenrad 9b, befindet sich auch die Steuerplatte 4 in einer Grundposition, wenn sich der Greifarm 2, durch die Feder zwischen den Federhaken 41, 42, in einer Grundposition befindet.

Die Verriegelungsvorrichtung 1 umfasst einen Haltegriff 10 (analog dazu Haltegriff 10'). Der Haltegriff umfasst einen Abdeckungsabschnitt 12 mit einem Inneren Abschnitt 13 (der innere Abschnitt 13 des Abdeckungsabschnitts 12 ist am besten als innerer Abschnitt 13') erkennbar.

Der Haltegriff 10 kann durch korrespondierende Gegenstücke im Inneren 13 des Abdeckungsabschnitts 12 mit zumindest einem der Arretierungsabschnitte 51, 52 der äußeren Halteplatte 3b lösbar verbunden werden. Die Verbindung des Haltegriffs 10 mit der Verriegelungsmechanik 150 beispielsweise über die äußere Halteplatte 3b ist speziell durch eine Steck-, Rast- oder Klemmverbindung realisiert.

Weiterhin umfasst der Haltegriff 10 einen Schlitz 11 (am besten erkennbar als analoger Schlitz 11' des Haltegriffs 10'). Durch den Schlitz 11 kann der Abschnitt der Steuerplatte 4 greifen, an dem die Griffe 15a, 15b angeordnet sind.

Der Haltegriff 10 mit Abdeckungsabschnitt 12 verdeckt im montierten Zustand einen Großteil der Verriegelungsmechanik 150, wobei der Abschnitt der Steuerplatte 4 mit den Griffen 15a, 15b aus dem Haltegriff 10 ragt und der Greifhaken 2a des Greifarms 2, damit ein Bediener über die Steuerplatte 4 eine Längsbewegung des Greifarms 2 steuern kann und der Greifhaken 2a in Vorsprünge an einem Flugobjekt eingreifen kann, wie oben beschrieben.

Ein Benutzer kann die Verriegelungsvorrichtung 1 mit einer Hand an einem Haltegriff 10, 10' greifen und halten. Der Benutzer kann die Verriegelungsvorrichtung 1 auch mit zwei Händen greifen und halten, wobei je eine Hand einen der Haltegriffe 10, 10' greifen kann.

Der Benutzer kann die Verriegelungsvorrichtung 1 an eine vorgesehene Position an einem Flugobjekt führen und dort sicher positionieren, dies durch Greifen an zumindest einen der Haltegriffe 10, 10'. Während die Verriegelungsvorrichtung sicher über den Haltegriff 10, 10' positioniert ist, kann der Benutzer durch Betätigen eines Griffs 15a, 15b, 15a', 15b' einen Greifarm 2, 2' so bewegen, dass die Verriegelungsvorrichtung 1 mit dem Flugobjekt verriegelt ist. Der Griff 15a, 15b, 15a', 15b' kann durch Finger der Hand des Benutzers betätigt werden, die den Haltegriff greift.

Die Verriegelungsmechanik umfasst auch eine Hülse 100 mit einem ersten (unteren) Abschnitt 101 und einem zweiten (oberen) Abschnitt 102.

Auf den unteren Abschnitt 101 der Hülse 100 kann ein Schlauch geschoben oder gesteckt werden. Dazu wird der Schlauch typischerweise über die umlaufenden Vorsprünge 105, 106 der Hülse 100 geschoben und beispielsweise mit einem Schlauchbinder befestigt, wobei der Schlauchbinder zwischen den umlaufenden Vorsprüngen 105, 106 angebracht werden kann.

An den oberen Abschnitt 102 der Hülse 100 ist ein Zylinderstück 110, beispielsweise zwischen zwei umlaufenden Vorsprüngen 107, 108, angeordnet.

Das Zylinderstück 110 kann aus Metall bestehen. Speziell kann das Zylinderstück ein Band sein, das Eisen umfasst (z.B. Stahlband).

Das Zylinderstück 110 besitzt einen Schlitz 111, wodurch das Zylinderstück 110 radial expandiert werden kann, was die Aufbringung im oberen Abschnitt 102 der Hülse 100 erleichtert, da das Zylinderstück 110 dadurch leichter über den umlaufenden Vorsprung 108 gestreift werden kann.

An das Zylinderstück 110 wird die Verriegelungsmechanik 150 befestigt. Dies kann über die Nieten 5a, 5c erfolgen. Diese Verbindung ist entsprechend bedingt lösbar, d.h. die Nieten 5a, 5c müssten zerstört werden, um die Verriegelungsmechanik 150 von dem Zylinderstück 110 zu trennen.

Da der Schlitz 111 auch nach Befestigung der Verriegelungsmechanik 150 mit dem Zylinderstück 110 erhalten ist, können Einheiten des Zylinderstücks 110 und der Verriegelungsmechanik 150 über den umlaufenden Vorsprung 108 gestreift werden und im oberen Abschnitt 102 der Hülse 100 angebracht werden.

Ein Steckelement 120 kann in der Hülse 100 eingesteckt oder auf die Hülse 100 aufgesteckt sein. Das Steckelement 120 kann mit dem Haltegriff 10 lösbar, beispielsweise durch Schrauben 61, 62, verbunden werden.

An dem Steckelement 120 ist ein Dichtungselement 130, beispielsweise aus Schaumstoff, angeordnet. Das Dichtungselement 130 dichtet die Verriegelungsvorrichtung 1 gegen ein Flugobjekt ab, wenn die Verriegelungsvorrichtung 1 damit verbunden ist.

Der Haltegriff 10 ist nicht direkt mit dem Zylinderstück 110 verbunden.

Durch die Ausgestaltung der Verbindung der einzelnen Komponenten der Verriegelungsvorrichtung 1 ergeben sich erhebliche Vorteile, beispielsweise hinsichtlich der Austauschbarkeit von Verschleißteilen der Verriegelungsvorrichtung 1.

Besonders ein Austausch des Dichtungselements 130 kann von Zeit zu Zeit notwendig sein, aber auch ein Austausch der Haltegriffe 10, 10' kann, vor allem durch erfahrungsgemäß auftretenden unsachgemäßen Gebrauch, notwendig sein.

Ein Austausch speziell dieser Komponenten ist durch die beschriebene Verbindungsausgestaltung erleichtert.

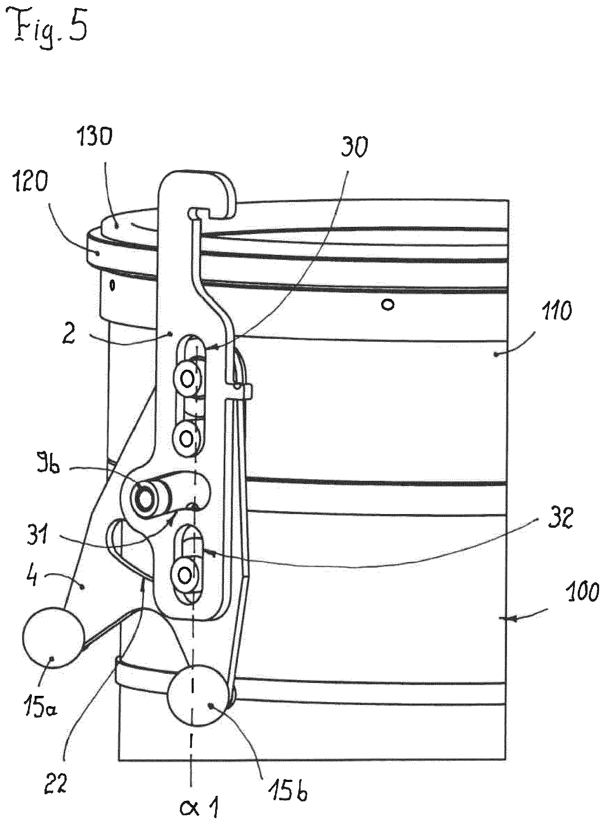

In den Fig. 2 bis 4 ist in einer Seitenansicht ein Teil eine Verriegelungsvorrichtung 1 mit einem Teil einer Verriegelungsmechanik 150 gezeigt. In den Fig. 5 bis 7 ist dies analog in einer leicht unterschiedlichen Seitenansicht gezeigt.

Die Verriegelungsvorrichtung umfasst eine Hülse 100, ein Zylinderstück 110, ein Steckelement 120 mit Dichtungselement 130 und einen Teil einer Verriegelungsmechanik 150. Der Teil der Verriegelungsmechanik 150 umfasst einen Greifarm 2 und eine Steuerplatte 4.

Der Greifarm 2 weist einen Greifarm 2a eine erste Ausnehmung 30, eine Kulissenbahn 31 und eine zweite Ausnehmung 32 auf.

Die Steuerplatte 4 weist eine erste und zweite Ausnehmung 20, 21 (in der Figur nicht mit Bezugszeichen versehen), eine dritte Ausnehmung 22 sowie Haltegriffe 15a, 15b auf.

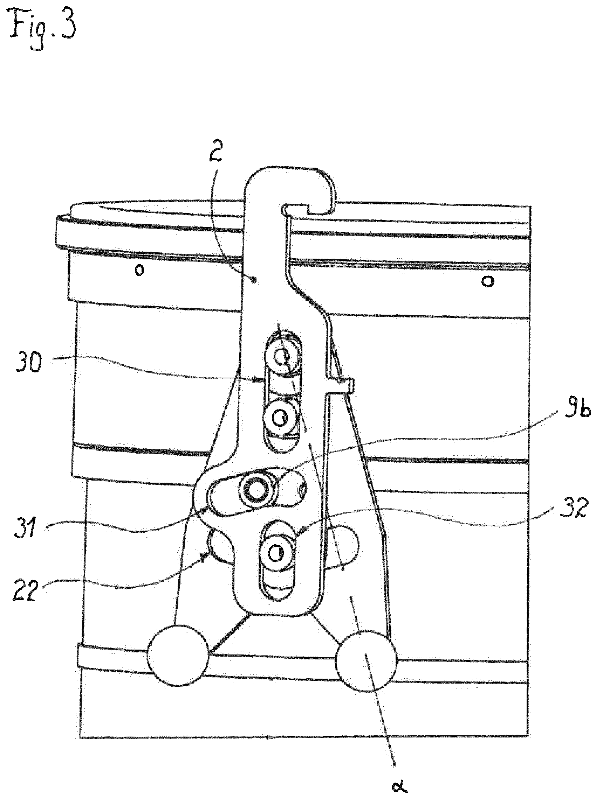

Die Steuerplatte 4 ist in Fig. 2 und Fig. 5 in einer ersten Winkelendlage α₁ dargestellt. In dieser Position oder Lage ist der Greifarm 2 maximal ausgefahren (axial oben liegend). Im Beispiel ist das 0° aus der Vertikalen, bezogen auf den ersten Griff 15b (die Handhabe zum Ausfahren des Greifarms 2). Der allgemeine Schwenkwinkel ist in Figur 3 mit α angegeben, er liegt zwischen α₁ und α₅.

Es kann durch eine Feder ein solcher Schwenkwinkel α₂ eingestellt sein, bei dem beide Handhaben 15a und 15b aus der Vertikalen beabstandet sind und mit einer der Handhaben 15b die Auslenkung nach oben erfolgt, und mit der anderen der Handhaben 15a die Ankopplung und dann die Verriegelung am Flugobjekt erfolgt.

Wird die Steuerplatte 4 um dessen Schwenkachse relativ zum Greifarm 2 geschwenkt, beispielsweise durch Drücken des zweiten Griffs 15a (der Handhabe zum Einfahren des Greifarms 2 und zum finalen Verriegeln), bewegt sich der Greifarm 2 längs und axial nach unten. Dies geschieht, da über das Kulissenlaufrad 9b eine Kraft auf den Greifarm 2 durch die Schwenkbewegung der Steuerplatte 4 ausgeübt wird.

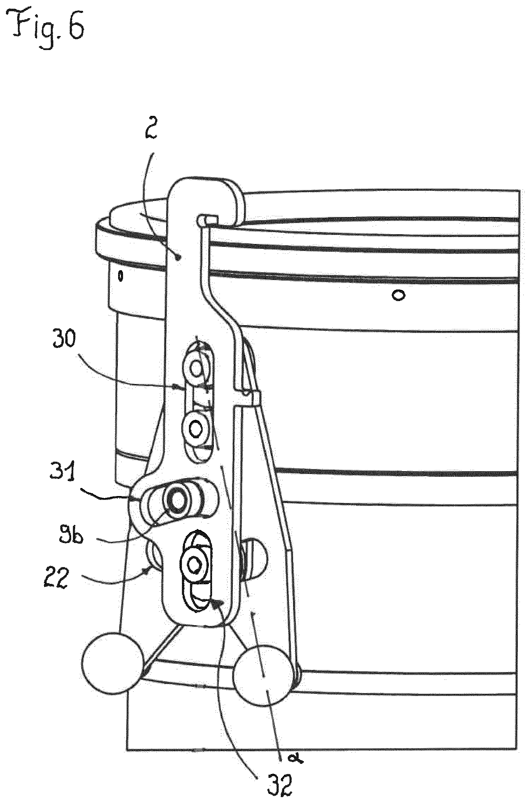

Eine noch nicht vollständig durchgeführte Schwenkung der Steuerplatte 4 zeigen die Fig. 3 und 6 mit einem Schwenkwinkel α, der zwischen den Winkelendlagen α₁ und α₅ liegt.

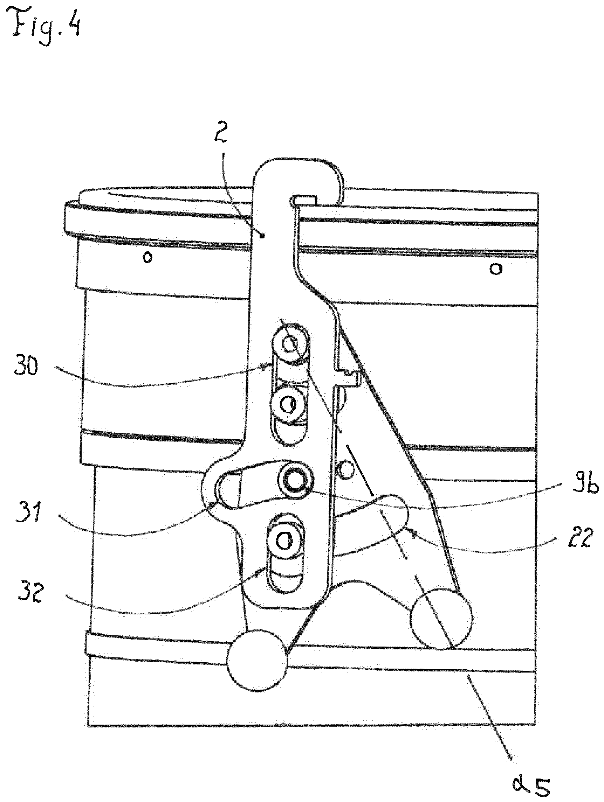

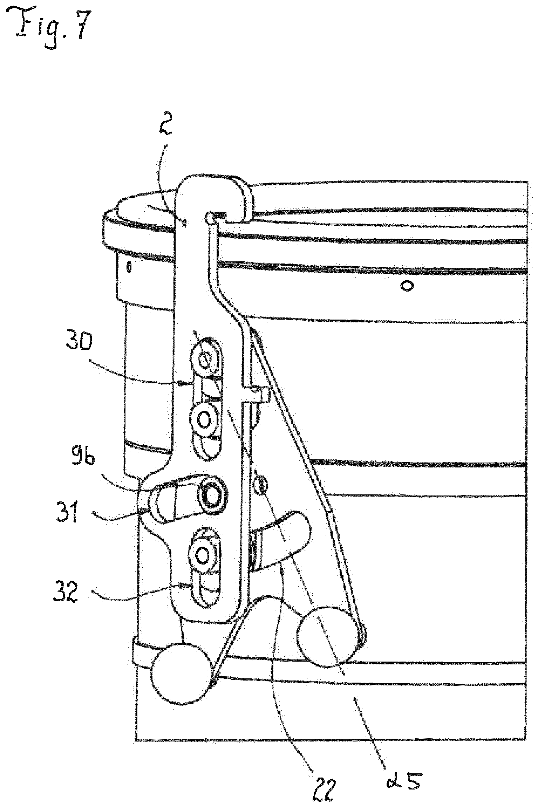

In den Fig. 4 und 7 ist die der Winkelendlage α₅ gezeigt. Hierbei ist die Steuerplatte 4 vollständig gegenüber der in den Fig. 2 und 5 gezeigten ersten Winkelendlage α₁ auf die andere Seite geschwenkt (die andere Winkelendlage). Die beiden Endlagen liegen zwischen 30° und 50° auseinander, bevorzugt sind sie kleiner als 150°, insbesondere 90°. Damit kann mit zwei verschiedenen Fingern einer Hand die Steuerplatte 4 ausreichend weit verschwenkt werden, um die Anbringung an dem Flugkörper zu erreichen und eine Verriegelung dieser Anbringung ebenso.

Im Beispiel liegt die zweite Handhabe in der Stellung der ersten Handhabe, wenn die ganze Schwenkweite (α₅ - α₁) durchlaufen ist. Mittelbar ist dadurch auch der Innenwinkel zwischen den beiden Handhaben für die beiden Finger umschrieben (bezogen auf den Drehpunkt der Steuerplatte 4).

In der Winkellage α₅ ist der Greifarm 2 mit dem Greifhaken 2a axial nach unten gezogen und der Greifhaken 2a des Greifarms 2 greift hinter einen Vorsprung an dem Flugobjekt, und zwar in einer verriegelten Lage. Kurz zuvor, insbesondere bis zu 10° vor Erreichen der α₅-Lage beginnt bei der Lage α₄. Das Verriegeln, mit keiner Abwärtsbewegung des Greifarms 2 mehr, sondern einer Fixierung nach Art eine Totpunktes bei der Lage α₄. Zwischen der α₄-Lage und der α₅-Lage liegt die Verriegelungszone.

Ein maximaler Schwenkwinkel lässt sich durch die beiden Winkelendlagen α₁ und α₅ festlegen, wobei sich der maximale Schwenkwinkel als Winkel zwischen diesen Positionen (Winkelendlagen, in den Figuren 2 bis 7 bestimmt durch den Mittelpunkt des Griffs oder Handhabe 15b) der Steuerplatte 4 um die Schwenkachse ergibt.

Die Griffe 15a, 15b, 15a', 15b' können kugelförmig ausgestaltet sein.

### Beispiele:

1. Fingerbetätigbare Verriegelungsvorrichtung für die Anbringung eines Luftschlauchs an einem Flugobjekt, die Verriegelungsvorrichtung (1) mit ...
   (a) zumindest einem längsbewegbaren Greifarm (2,2'), der zwischen zwei Halteplatten (3a,3b; 3a',3b') zum Eingriff in Vorsprünge am Flugobjekt längsbeweglich angeordnet ist;
   (b) wobei der Greifarm (2,2') von einer schwenkbar angeordneten Steuerplatte (4,4') längsbeweglich gesteuert ist und
      b1) der Greifarm (2,2') ausgefahren ist, wenn die Steuerplatte (4,4') in einer ersten Winkelendlage (α₁) liegt,
      b2) der Greifarm (2,2') zurückgezogen ist, wenn die Steuerplatte (4) in einer zweiten Winkelendlage (α₅) liegt, zum Verriegeln an dem Flugobjekt,
         wobei die beiden Winkelendlagen (α₁, α₅) von zumindest einem an der schwenkbaren Steuerplatte (4,4') angeordneten Griff (15a,15b; 15a',15b') fingerbetätigt gesteuert erreichbar sind oder erreicht werden, und eine Winkelendlage von jeweils einem und die andere Winkelendlage von einem jeweils anderen Finger derselben Hand ansteuerbar ist, insbesondere wenn die Verriegelungsvorrichtung mit dem Flugobjekt verriegelt wird oder wenn der Luftschlauch an dem Flugobjekt angebracht wird.
2. Verriegelungsvorrichtung nach Beispiel 1, wobei die beiden Halteplatten (3a,3b; 3a',3b') mit einem Niet oder Bolzen (5a,5b; 5a',5b') abstandsfest verbunden sind.
3. Verriegelungsvorrichtung nach einem der Beispiele 1 oder 2, wobei die beiden Winkelendlagen (α₁,α₅) einen Zwischenwinkel einschließen der kleiner als 150°, insbesondere kleiner als 90° ist.
4. Verriegelungsvorrichtung nach einem der vorstehenden Beispiele, wobei eine innere (3a,3a') der Halteplatten (3a,3b; 3a',3b') an einem Zylinderstück (110) direkt angeordnet ist, insbesondere über eine Fortsetzung des Niets oder Bolzens, der die beiden Halteplatten (3a,3b; 3a',3b') abstandsfest verbindet.
5. Verriegelungsvorrichtung nach Beispiel 4, mit zwei längsbewegbaren Greifarmen (2,2'), wobei jeder der beiden Greifarme (2,2') zwischen zwei Halteplatten (3a,3b; 3a',3b') längsbeweglich angeordnet ist und wobei die beiden längsbewegbaren Greifarme (2,2') über jeweils die ihr zugeordnete innere Halteplatte (3a,3a') gegenüberliegend am Zylinderstück (110) angeordnet sind.
6. Verriegelungsvorrichtung nach einem der Beispiele 1 bis 5, wobei die äußere Halteplatte (3b,3b') oder die jeweils äußere Halteplatte (3b,3b') so ausgebildet ist, dass ein aufgeschobener Haltegriff (10,10') mit einem Abdeckungsabschnitt (12) arretiert ist, durch Eingriff eines Inneren (13') des Abdeckungsabschnitts (12) an der jeweils äußeren Halteplatte (3b,3b').
7. Verriegelungsvorrichtung nach Beispiel 4 oder 5, wobei eine Hülse (100) vorgesehen ist, auf die das Zylinderstück (110) axial aufschiebbar ist, um daran befestigt zu werden.
8. Verriegelungsvorrichtung nach Beispiel 7, wobei die Anbringung des Zylinderstücks (110) an der Hülse (100) möglich ist, ohne dass der Haltegriff (10,10') angebracht ist, insbesondere der aufzuschiebende Haltegriff (10,10') erst nach der Montage des Zylinderstücks (110) an der Hülse (100) erfolgt.
9. Verriegelungsvorrichtung nach Beispiel 8, wobei der oder jeder aufgeschobene Haltegriff (10,10') an einem Steckelement (120), das in oder auf die Hülse (100) einsteckbar oder aufsteckbar ist, befestigbar ist und am unteren Ende des Abdeckungsabschnitts (12,12') der zumindest eine, an der schwenkbaren Steuerplatte (4) angeordnete, finger-betätigbare Griff (15a,15b; 15a',15b') vorsteht.
10. Verriegelungsvorrichtung nach Beispiel 8, wobei das Steckelement (120) an einem Stutzen eines Flugobjekts ansteckbar ist und ein Schlauch auf die Hülse (100) aufsteckbar oder aufschiebbar ist, insbesondere die Hülse (100) drehfähig gegenüber dem Zylinderstück (110) ist.
11. Verriegelungsvorrichtung nach einem der vorstehenden Beispiele, wobei der Greifarm (2,2') eine Kulissenbahn (31) umfasst, in die ein Kulissenrad oder Kulissenstift (9b), der auf der Steuerplatte (4,4') angeordnet ist, eingreift und in der Kulissenbahn (31) bewegbar ist, sodass durch eine Schwenkbewegung der Steuerplatte (4,4') eine Längsbewegung des Greifarms (2,2') verursacht wird.
12. Verriegelungsvorrichtung nach einem der vorstehenden Beispiele, wobei die Steuerplatte (4,4') eine Ausnehmung (22,22') umfasst, in die ein Eingriffsstück (8,8'), das auf einer der Halteplatten (3a,3b; 3a',3b') angeordnet ist, eingreift, sodass eine mögliche Schwenkbewegung der Steuerplatte (4,4') zwischen den Winkelendlagen (α₁, α₅) begrenzt ist.
13. Verriegelungsvorrichtung nach einem der vorstehenden Beispiele, umfassend einen Haltegriff (10; 10'), wobei der Haltegriff (10;10') relativ zu zumindest einer der Halteplatten (3a,3b; 3a',3b') im Wesentlichen unbeweglich angeordnet ist.
14. Verriegelungsvorrichtung nach einem der Beispiele 1 bis 13, umfassend einen Haltegriff (10; 10'), wobei der Haltegriff (10; 10') bei einer Bewegung der Steuerplatte (4,4') zwischen der ersten Winkelendlage (α₁) und der zweiten Winkelendlage (α₅) oder zwischen der zweiten Winkelendlage (α₅) und der ersten Winkelendlage (α₁) im Wesentlichen unbewegt bleibt.
15. Verriegelungsvorrichtung zum Verbinden eines Schlauchs mit einem Flugobjekt, umfassend eine Hülse (100) mit einem ersten Abschnitt (101) und einem zweiten Abschnitt (102), ein Zylinderstück (110) und eine Verriegelungsmechanik (150,150'), wobei
   (a) das Zylinderstück (110) an dem zweiten Abschnitt (102) der Hülse (100) angeordnet ist;
   (b) der erste Abschnitt (101) der Hülse (100) so ausgestaltet ist, dass ein Schlauch auf den ersten Abschnitt (101) der Hülse (100) aufschiebbar ist; und
   (c) die Verriegelungsmechanik (150, 150') direkt mit dem Zylinderstück (110) verbunden ist.
16. Verriegelungsvorrichtung nach Beispiel 15 mit einem Steckelement (120), wobei das Steckelement (120) in oder auf die Hülse (100) eingesteckt oder aufgesteckt ist.
17. Verriegelungsvorrichtung nach Beispiel 16 mit einem Haltegriff (10,10'), wobei der Haltegriff (10,10') mit der Verriegelungsmechanik (150,150') verbunden ist und der Haltegriff (10,10') mit dem Steckelement (120) verbunden ist, insbesondere der Haltegriff (10,10') mit der Verriegelungsmechanik (150,150') durch eine Steck-, Rast- oder Klemmverbindung verbunden ist und der Haltegriff (10,10') mit dem Steckelement (120) durch ein Befestigungsmittel verbunden ist.
18. Verriegelungsvorrichtung nach einem der Beispiele 15 bis 17 mit zwei Verriegelungsmechaniken (150,150') und zwei Haltegriffen (10,10'), wobei beide Verriegelungsmechaniken (150,150') direkt mit dem Zylinderstück (110) verbunden sind und beide Haltegriffe (10,10') mit dem Steckelement (120) verbunden sind, insbesondere die Haltegriffe (10,10') mit den Verriegelungsmechaniken (150,150') durch eine Steck-, Rast- oder Klemmverbindung verbunden sind und die Haltegriffe (10,10') mit dem Steckelement (120) durch ein Befestigungsmittel verbunden sind.
19. Verriegelungsvorrichtung nach einem der vorstehenden Beispiele, wobei die Verriegelungsvorrichtung, insbesondere das Steckelement (120), ein Dichtungselement (130) umfasst, das dichtend zwischen der Verriegelungsvorrichtung und dem Flugobjekt liegt, wenn die Verriegelungsvorrichtung mit dem Flugobjekt verbunden ist.
20. Verriegelungsvorrichtung nach einem der vorstehenden Beispiele, wobei die Verriegelungsmechanik (150,150') zumindest einen längsbewegbaren Greifarm (2,2') umfasst, der zwischen zwei Halteplatten (3a,3b; 3a',3b') zum Eingriff in Vorsprünge am Flugobjekt längsbeweglich angeordnet ist, wobei der Greifarm von einer schwenkbar angeordneten Steuerplatte (4,4') längsbeweglich gesteuert ist.
21. Verriegelungsvorrichtung nach Beispiel 20, wobei der Greifarm (2,2') ausgefahren ist, wenn die Steuerplatte (4,4') in einer ersten Winkelendlage (α₁) liegt, und der Greifarm (2,2') zurückgezogen ist, wenn die Steuerplatte (4,4') in einer zweiten Winkelendlage (α₅) liegt, zum Verriegeln an dem Flugobjekt, insbesondere wobei die beiden Winkelendlagen (α₁, α₅) von zumindest einem an der schwenkbaren Steuerplatte (4,4') angeordneten Griff (15a,15b; 15a',15b') fingerbetätigt gesteuert erreichbar sind oder erreicht werden, und eine Winkelendlage von jeweils einem und die andere Winkelendlage von einem jeweils anderen Finger derselben Hand ansteuerbar ist und der Winkel zwischen den beiden Winkelendlagen (α₁, α₅) kleiner als 150° ist.
22. Verriegelungsvorrichtung nach Beispiel 20 oder 21, wobei der Greifarm (2,2') eine Kulissenbahn (31) umfasst, in die ein Kulissenrad oder Kulissenstift (9b), der auf der Steuerplatte (4,4') angeordnet ist, eingreift und in der Kulissenbahn (31) bewegbar ist, sodass durch eine Schwenkbewegung der Steuerplatte (4,4') eine Längsbewegung des Greifarms (2,2') verursacht wird.
23. Verriegelungsvorrichtung nach einem der Beispiele 20 bis 22, wobei die Steuerplatte (4,4') eine Ausnehmung (22,22') umfasst, in die ein Eingriffsstück (8,8'), das auf einer der Halteplatten (3a,3b; 3a',3b') angeordnet ist, eingreift, sodass eine mögliche Schwenkbewegung der Steuerplatte (4,4') zwischen den Winkelendlagen (α₁, α₅) begrenzt ist.
24. Verriegelungsvorrichtung nach einem der Beispiele 16 bis 23, wobei ein Haltegriff (10,10') direkt mit dem Steckelement (120) verbunden ist und der Haltegriff (10,10') nicht direkt mit dem Zylinderstück (110) verbunden ist, insbesondere zwei Haltegriffe (10,10') direkt mit dem Steckelement (120) verbunden sind und keiner der Haltegriffe (10,10') direkt mit dem Zylinderstück (110) verbunden ist.
25. Verriegelungsvorrichtung nach einem der Beispiele 16 bis 24, umfassend einen Haltegriff (10;10'), wobei der Haltegriff (10;10') relativ zu dem Zylinderstück (110) im Wesentlichen unbeweglich angeordnet ist.
26. Verwendung einer Verriegelungsvorrichtung nach einem der vorstehenden Beispiele zum Verbinden eines Schlauchs mit einem Flugobjekt.

## Patentansprüche

1. **Fingerbetätigbare Verriegelungsvorrichtung** für die Anbringung eines Luftschlauchs an einem Flugobjekt, die Verriegelungsvorrichtung (1)
mit ...
(a) zumindest einem längsbewegbaren Greifarm (2,2'), der zwischen zwei Halteplatten (3a,3b; 3a',3b') zum Eingriff in Vorsprünge am Flugobjekt längsbeweglich angeordnet ist;
(b) wobei der Greifarm (2,2') von einer schwenkbar angeordneten Steuerplatte (4,4') längsbeweglich gesteuert ist und
b1) der Greifarm (2,2') ausgefahren ist, wenn die Steuerplatte (4,4') in einer ersten Winkelendlage (α₁) liegt,
b2) der Greifarm (2,2') zurückgezogen ist, wenn die Steuerplatte (4,4') in einer zweiten Winkelendlage (α₅) liegt, zum Verriegeln an dem Flugobjekt,
wobei die beiden Winkelendlagen (α₁, α₅) von zumindest einem an der schwenkbaren Steuerplatte (4,4') angeordneten Griff (15a,15b; 15a',15b') fingerbetätigt gesteuert erreichbar sind oder erreicht werden, und eine Winkelendlage von jeweils einem und die andere Winkelendlage von einem jeweils anderen Finger derselben Hand ansteuerbar ist.

2. Verriegelungsvorrichtung nach Anspruch 1, wobei eine innere (3a,3a') der Halteplatten (3a,3b; 3a',3b') an einem Zylinderstück (110) direkt angeordnet ist.

3. Verriegelungsvorrichtung nach Anspruch 2, mit zwei längsbewegbaren Greifarmen (2,2'), wobei jeder der beiden Greifarme (2,2') zwischen zwei Halteplatten (3a,3b; 3a',3b') längsbeweglich angeordnet ist und wobei die beiden längsbewegbaren Greifarme (2,2') über jeweils die ihr zugeordnete innere Halteplatte (3a,3a') gegenüberliegend am Zylinderstück (110) angeordnet sind.

4. Verriegelungsvorrichtung nach einem der Ansprüche 1 bis 3, wobei die äußere Halteplatte (3b,3b') oder die jeweils äußere Halteplatte (3b,3b') so ausgebildet ist, dass ein aufgeschobener Haltegriff (10,10') mit einem Abdeckungsabschnitt (12) arretiert ist, durch Eingriff eines Inneren (13') des Abdeckungsabschnitts (12) an der jeweils äußeren Halteplatte (3b,3b').

5. Verriegelungsvorrichtung nach Anspruch 2 oder 3, wobei eine Hülse (100) vorgesehen ist, auf die das Zylinderstück (110) axial aufschiebbar ist, um daran befestigt zu werden.

6. Verriegelungsvorrichtung nach Anspruch 5, wobei die Anbringung des Zylinderstücks (110) an der Hülse (100) möglich ist, ohne dass der Haltegriff (10,10') angebracht ist, insbesondere der aufzuschiebende Haltegriff (10,10') erst nach der Montage des Zylinderstücks (110) an der Hülse (100) erfolgt.

7. Verriegelungsvorrichtung nach Anspruch 6, wobei der oder jeder aufgeschobene Haltegriff (10,10') an einem Steckelement (120), das in oder auf die Hülse (100) einsteckbar oder aufsteckbar ist, befestigbar ist und am unteren Ende des Abdeckungsabschnitts (12,12') der zumindest eine, an der schwenkbaren Steuerplatte (4) angeordnete, finger-betätigbare Griff (15a,15b; 15a',15b') vorsteht.

8. Verriegelungsvorrichtung nach Anspruch 6, wobei das Steckelement (120) an einem Stutzen eines Flugobjekts ansteckbar ist und ein Schlauch auf die Hülse (100) aufsteckbar oder aufschiebbar ist, insbesondere die Hülse (100) drehfähig gegenüber dem Zylinderstück (110) ist.

9. Verriegelungsvorrichtung nach einem der vorstehenden Ansprüche, wobei der Greifarm (2,2') eine Kulissenbahn (31) umfasst, in die ein Kulissenrad oder Kulissenstift (9b), der auf der Steuerplatte (4,4') angeordnet ist, eingreift und in der Kulissenbahn (31) bewegbar ist, sodass durch eine Schwenkbewegung der Steuerplatte (4,4') eine Längsbewegung des Greifarms (2,2') verursacht wird.

10. Verriegelungsvorrichtung nach einem der vorstehenden Ansprüche, umfassend einen Haltegriff (10; 10'), wobei der Haltegriff (10;10') relativ zu zumindest einer der Halteplatten (3a,3b; 3a',3b') im Wesentlichen unbeweglich angeordnet ist.

11. Verriegelungsvorrichtung nach einem der Ansprüche 1 bis 9, umfassend einen Haltegriff (10; 10'), wobei der Haltegriff (10; 10') so angeordnet ist, dass der Haltegriff (10; 10') bei einer Bewegung der Steuerplatte (4,4') zwischen der ersten Winkelendlage (α₁) und der zweiten Winkelendlage (α₅) oder zwischen der zweiten Winkelendlage (α₅) und der ersten Winkelendlage (α₁) im Wesentlichen unbewegt bleibt.

12. **Verriegelungsvorrichtung** zum Verbinden eines Schlauchs mit einem Flugobjekt, umfassend eine Hülse (100) mit einem ersten Abschnitt (101) und einem zweiten Abschnitt (102), ein Zylinderstück (110) und eine Verriegelungsmechanik (150,150'), wobei
(a) das Zylinderstück (110) an dem zweiten Abschnitt (102) der Hülse (100) angeordnet ist;
(b) der erste Abschnitt (101) der Hülse (100) so ausgestaltet ist, dass ein Schlauch auf den ersten Abschnitt (101) der Hülse (100) aufschiebbar ist; und
(c) die Verriegelungsmechanik (150, 150') direkt mit dem Zylinderstück (110) verbunden ist.

13. Verriegelungsvorrichtung nach Anspruch 12 mit einem Steckelement (120), wobei das Steckelement (120) in oder auf die Hülse (100) eingesteckt oder aufgesteckt ist, insbesondere ein Haltegriff (10, 10') mit der Verriegelungsmechanik (150,150') verbunden ist und der Haltegriff (10,10') mit dem Steckelement (120) verbunden ist.

14. Verriegelungsvorrichtung nach einem der Ansprüche 12 oder 13, wobei ein Haltegriff (10,10') direkt mit dem Steckelement (120) verbunden ist und der Haltegriff (10,10') nicht direkt mit dem Zylinderstück (110) verbunden ist, insbesondere zwei Haltegriffe (10,10') direkt mit dem Steckelement (120) verbunden sind und keiner der Haltegriffe (10,10') direkt mit dem Zylinderstück (110) verbunden ist.

15. Verriegelungsvorrichtung nach einem der Ansprüche 12 bis 14, umfassend einen Haltegriff (10;10'), wobei der Haltegriff (10;10') relativ zu dem Zylinderstück (110) im Wesentlichen unbeweglich angeordnet ist.
